# EUROPEAN PATENT APPLICATION

(11) **EP 4 465 422 A1**
(43) Date of publication of application: **20.11.2024**
(21) Application number: 23863312.7
(22) Date of filing: 26.06.2023
(51) Int. Cl.: H01M 50/184, H01M 50/198, H01M 50/174, B29C 65/00, B29C 65/18, H01M 50/105, H01M 50/211, B29L 31/34

(54) **POUCH-TYPE BATTERY CELL AND BATTERY MODULE COMPRISING SAME**

(30) Priority: 08.09.2022 KR 20220113985
(71) Applicant: LG Energy Solution, Ltd., Seoul 07335 (KR)
(72) Inventor: BAEK, Doo Hyun, Daejeon 34122 (KR); CHO, Seung Su, Daejeon 34122 (KR); KANG, In Woo, Daejeon 34122 (KR); BAEK, Sang Min, Daejeon 34122 (KR); HONG, Eui Jin, Daejeon 34122 (KR); LEE, Hyun Ju, Daejeon 34122 (KR)
(74) Representative: Goddar, Heinz J.
(86) International application number: PCT/KR2023/008808
(87) International publication number: WO 2024/053830

(57) **Abstract**

The present invention relates to a pouch-shaped battery cell and a battery module including the same, and more particularly to a pouch-shaped battery cell including a pouch case having a receiving space, an electrode assembly received in the pouch case, the electrode assembly including a positive electrode, a negative electrode, a separator, and a pair of electrode tabs provided at one side or opposite sides thereof, and a pair of electrode leads connected to the pair of electrode tabs, the pair of electrode leads protruding out of the pouch case, wherein a sealed portion includes a wing portion, a terrace portion, and a reinforcement portion, wherein the wing portion extends along an overall length direction of the pouch case, wherein the terrace portion extends along an overall width direction of the pouch case, and wherein the reinforcement portion has a predetermined shape and area extending outwardly from the terrace portion and is configured to inhibit or delay a gas venting of the pouch-shaped battery cell, and the width of the wing portion is greater than the width of the terrace portion, and a battery module including the same.

## Description

### [Technical Field]

This application claims the benefit of priority to Korean Patent Application No. 2022-0113985 filed on September 8, 2022, the disclosure of which is incorporated herein by reference in its entirety.

The present invention relates to a pouch-shaped battery cell and a battery module including the same, and more particularly to a pouch-shaped battery cell capable of preventing or delaying gas venting, thereby contributing to extension of the lifespan thereof, and a battery module including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, for a pouch-shaped battery cell, a lower case and an upper case are prepared using a laminated sheet constituted by an inner resin layer, a metal layer, and an outer resin layer, and the lower case and the upper case are thermally fused to each other in the state in which the lower case and the upper case face each other such that the lower case and the upper case are joined to each other.

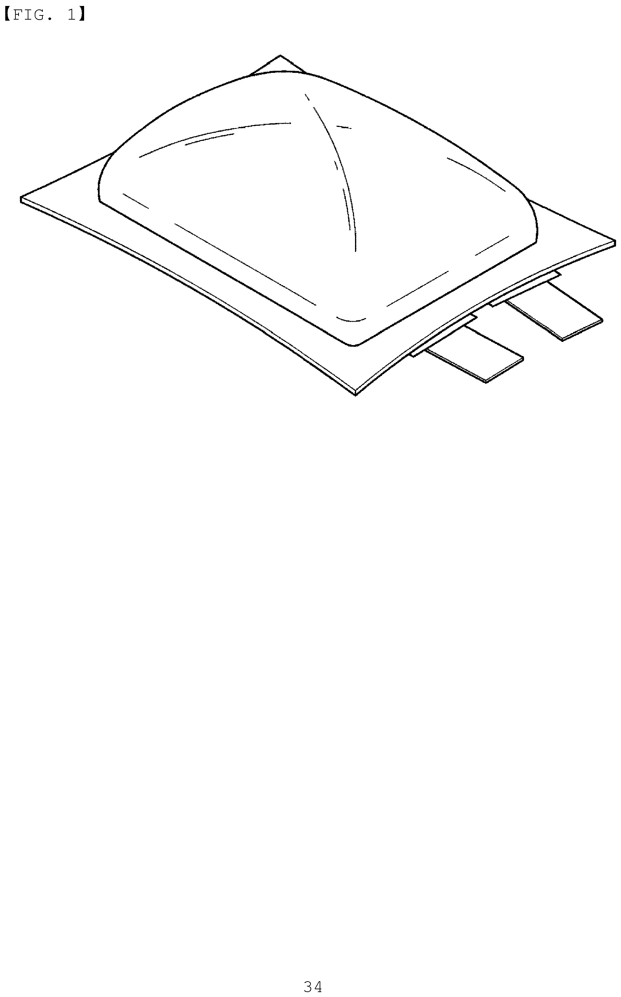

When the pouch-shaped battery cell is used at high temperatures or during charging and discharging of the pouch-shaped battery cell, however, gas is generated, whereby a swelling phenomenon in which the case swells occurs (see FIG. 1). In this case, the thermally fused parts are separated from each other, whereby an electrolytic solution in the case leaks to the outside, and therefore a risk of ignition is increased and the lifespan of the battery cell is shortened.

### (Prior Art Document)

(Patent Document 1) Korean Patent Application Publication No. 2019-0110349 (published on September 30, 2019)

### [Disclosure]

### [Technical Problem]

The present invention has been made in view of the above problems, and it is an object of the present invention to provide a pouch-shaped battery cell having a structure capable of preventing or delaying gas venting and a battery module including the same.

### [Technical Solution]

A pouch-shaped battery cell according to the present invention to accomplish the above object includes a pouch case (100) including a lower case (110), an upper case (120), and a sealed portion (130), wherein the lower case (110) has a receiving space, the upper case (120) is located on the lower case (110), and the sealed portion (130) is a thermally-fused three-sided sealed portion located at edges of the lower case (110) and the upper case (120) that face each other; an electrode assembly (200) received in the pouch case (100), the electrode assembly including a positive electrode, a negative electrode, a separator, and a pair of electrode tabs provided at one side or opposite sides thereof; and a pair of electrode leads (300) connected to the pair of electrode tabs, the pair of electrode leads protruding out of the pouch case (100), wherein the sealed portion (130) includes a wing portion (131), a terrace portion (132), and a reinforcement portion (133), wherein the wing portion (131) extends along an overall length direction of the pouch case (100), wherein the terrace portion (132) extends along an overall width direction of the pouch case (100), and wherein the reinforcement portion (133) has a predetermined shape and area extending outwardly from the terrace portion (132) and is configure to inhibit or delay a gas venting of the pouch-shaped battery cell, and wherein the width of the wing portion is greater than the width of the terrace portion.

Also, in the pouch-shaped battery cell according to the present invention, the reinforcement portion (133) may be provided on each of a pair of terrace portions (132), wherein each of the pair of terrace portions (132) is disposed so as to face each other.

Also, in the pouch-shaped battery cell according to the present invention, the reinforcement portion (133) may be provided in the vicinity of an edge of each of the pair of terrace portions (132).

Also, in the pouch-shaped battery cell according to the present invention, the reinforcement portion (133) may be provided in the vicinity of each of opposite edges of each of the pair of terrace portions (132).

Also, in the pouch-shaped battery cell according to the present invention, the reinforcement portions (133) may be provided at opposite sides in the state in which the electrode lead (300) is located therebetween.

Also, in the pouch-shaped battery cell according to the present invention, the wing portion (131) may be configured to ben toward the side of the pouch case (100) in the overall length direction.

Also, in the pouch-shaped battery cell according to the present invention, the reinforcement portion (133) may be configured to bend toward the side of the pouch case (100) in the overall width direction.

Also, the pouch-shaped battery cell according to the present invention may further include a fixing member (600) located at an outer surface of the reinforcement portion (133) so as to maintain the bent state of the reinforcement portion (133).

Also, in the pouch-shaped battery cell according to the present invention, the fixing member (600) may be a belt-shaped tape with an adhesive applied to one surface thereof and may be located so as to wrap the reinforcement portion (133), and one end of the fixing member may be fixed to the lower case (110) and the other end of the fixing member may be fixed to the upper case (120).

In addition, a method of manufacturing a pouch-shaped battery cell according to the present invention includes a first step of cutting a laminate sheet having an inner resin layer, a metal layer, and an outer resin layer to a predetermined shape and size; a second step of forming a pair of receiving spaces in the cut laminate sheet, wherein the pair of receiving spaces are located so as to face each other when the cut laminate sheet is folded to prepare a pouch case; a third step of receiving an electrode assembly in the pair of receiving spaces of the pouch case; and a fourth step of folding the pouch case and thermally fusing edges of the pair of receiving spaces to form a sealed portion, wherein the sealed portion includes a wing portion, a terrace portion, and a reinforcement portion, wherein the wing portion extends along an overall length direction of the pouch case, wherein the terrace portion extends along an overall width direction of the pouch case, and wherein the reinforcement portion has a predetermined shape and area extending outwardly from the terrace portion and is configured to inhibit or delay a gas venting of the pouch-shaped battery cell, and wherein the width of the wing portion is greater than the width of the terrace portion.

Also, the method according to the present invention may further include bending the wing portion toward the side of the pouch case in the overall length direction after the fourth step.

Also, the method according to the present invention may further include bending the reinforcement portion toward the side of the pouch case (100) in the overall width direction after the fourth step.

Also, the method according to the present invention may further include fixing an outer surface of the reinforcement portion and an outer surface of the pouch case with a tape so as to maintain the bent state of the reinforcement portion.

In addition, the present invention provides a battery module including the pouch-shaped battery cell.

### [Advantageous Effects]

As is apparent from the above description, in a pouch-shaped battery cell according to the present invention and a battery module including the same, a reinforcement portion is provided at a sealed portion of the terrace portion, which is vulnerable to venting gas pressure, whereby it is possible to inhibit or delay gas venting, which may contribute to extension of the lifespan of the battery cell.

### [Description of Drawings]

FIG. 1 is a schematic view showing a pouch-shaped battery cell in a swollen state.
FIG. 2 is an exploded perspective view of a pouch-shaped battery cell according to a first preferred embodiment of the present invention.
FIG. 3 is a perspective view of the pouch-shaped battery cell according to the first preferred embodiment of the present invention in a sealed state.
FIG. 4 is a plan view of the pouch-shaped battery cell shown in FIG. 3.
FIG. 5 is a perspective view of the pouch-shaped battery cell according to the first preferred embodiment of the present invention.
FIG. 6 is a sectional view of the pouch-shaped battery cell taken along line B-B' of FIG. 5.
FIG. 7 is a perspective view of a pouch-shaped battery cell according to a second preferred embodiment of the present invention in a sealed state.
FIG. 8 is a plan view of the pouch-shaped battery cell shown in FIG. 7.
FIG. 9 is a perspective view of the pouch-shaped battery cell according to the second preferred embodiment of the present invention.
FIG. 10 is a flowchart illustrating a method of manufacturing a pouch-shaped battery cell according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a pouch-shaped battery cell according to the present invention and a battery module including the same will be described with reference to the accompanying drawings.

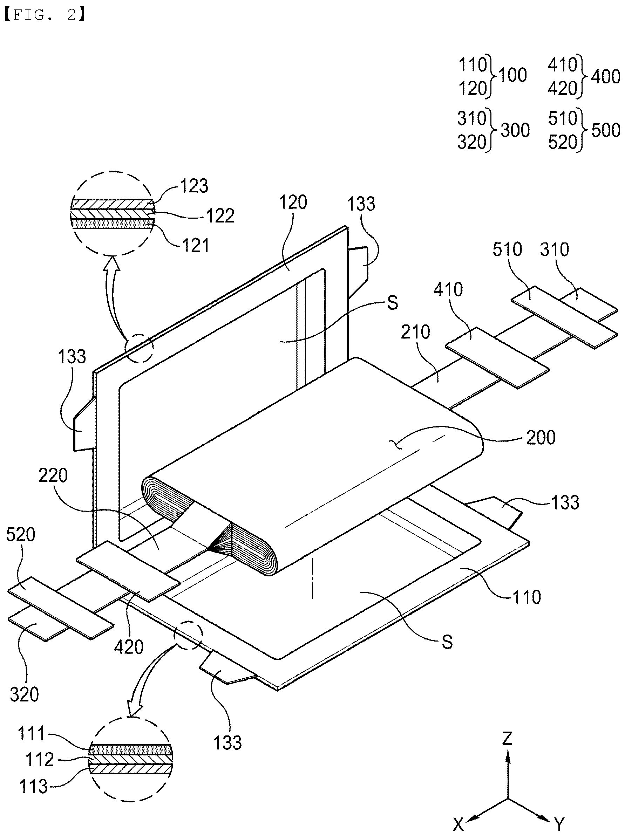

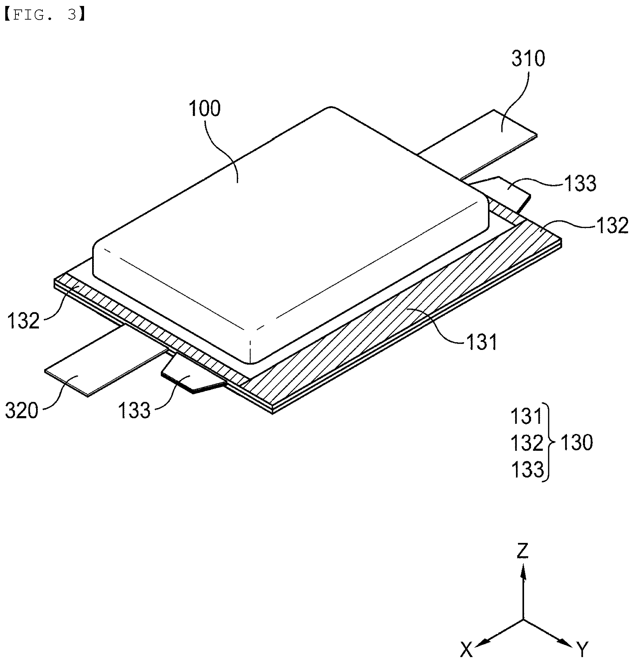

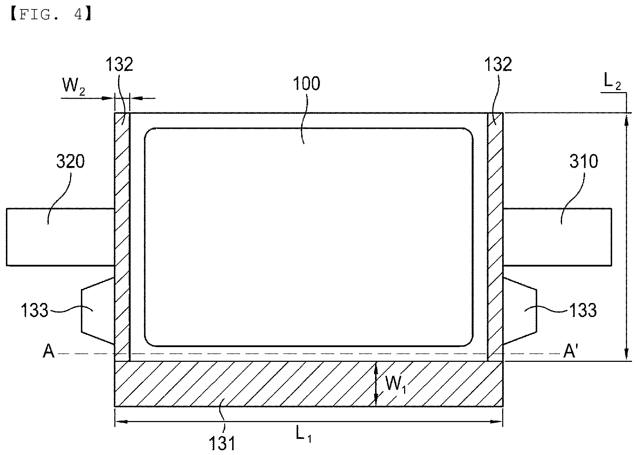

FIG. 2 is an exploded perspective view of a pouch-shaped battery cell according to a first preferred embodiment of the present invention, FIG. 3 is a perspective view of the pouch-shaped battery cell according to the first preferred embodiment of the present invention in a sealed state, and FIG. 4 is a plan view of the pouch-shaped battery cell shown in FIG. 3.

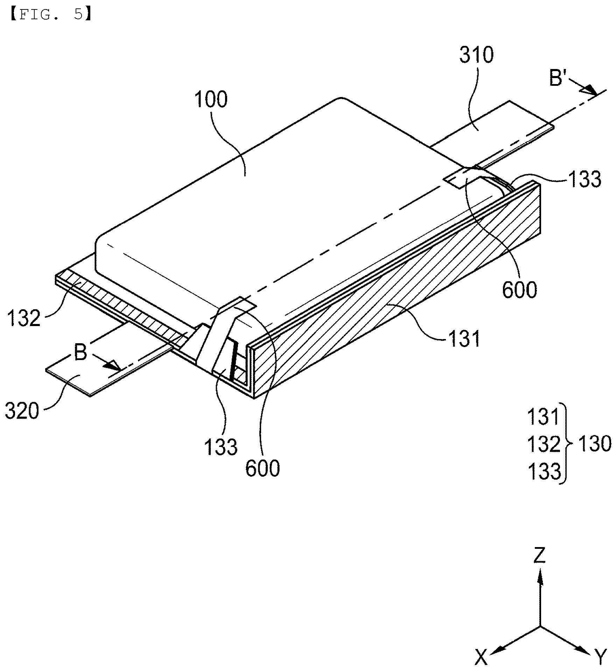

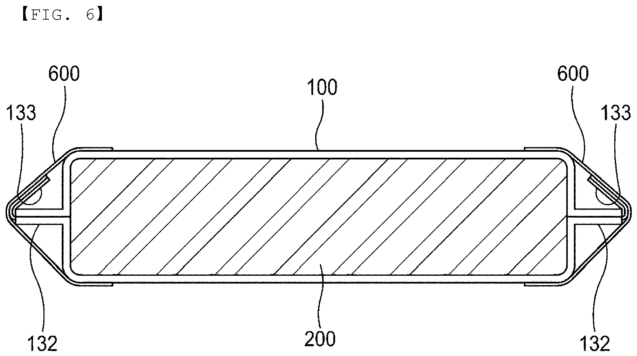

In addition, FIG. 5 is a perspective view of the pouch-shaped battery cell according to the first preferred embodiment of the present invention, and FIG. 6 is a sectional view of the pouch-shaped battery cell taken along line B-B' of FIG. 5.

As shown in FIGs. 2 to 6, the pouch-shaped battery cell according to the present invention may comprise a pouch case 100, an electrode assembly 200, an electrode lead 300, a protective tape 400, a lead film 500, and a fixing member 600.

First, the pouch case 100 may be constituted by a lower case 110 and an upper case 120, and has a pocket type receiving space S configured to receive the electrode assembly 200.

The pouch case 100 is made of a laminate sheet constituted by an outer resin layer, a metal layer, and an inner resin layer.

Specifically, the lower case 110 may be constituted by a first inner resin layer 111 located at the innermost side, a first metal layer 112 located at the center, and a first outer resin layer 113 located at the outermost side.

Even in the upper case 120, a second inner resin layer 121 is located at the innermost side, a second metal layer 122 is located in the center, and a second outer resin layer 123 is located at the outermost side.

Each of the first outer resin layer 113 and the second outer resin layer 123 located at an outer side of the pouch case 100 may be made of a heat-resistant polymer that exhibits excellent tensile strength, resistance to moisture permeation, and resistance to air transmission such that the first outer resin layer and the second outer resin layer exhibit high heat resistance and chemical resistance while protecting the electrode assembly 200. As an example, each of the first outer resin layer and the second outer resin layer may be made of nylon or polyethylene terephthalate; however, the present invention is not limited thereto.

Each of the metal layers, which abut the outer resin layers, i.e. each of the first metal layer 112 and the second metal layer 122 located at the center of the pouch case 100, corresponds to a barrier layer configured to prevent moisture or various kinds of gas from permeating into the battery from the outside. An aluminum thin film, which is lightweight and easily shapeable, may be used as a preferred material for each metal layer.

Each of the first inner resin layer 111 and the second inner resin layer 121 located at the innermost side of the pouch case 100 is disposed in direct contact with the electrode assembly 200, and therefore each of the first inner resin layer and the second inner resin layer must exhibit high insulation properties and high resistance to an electrolytic solution. In addition, each of the first inner resin layer and the second inner resin layer must exhibit high sealability in order to hermetically isolate the pouch case from the outside, i.e. a thermally-bonded sealed portion between inner layers must exhibit excellent thermal bonding strength.

Each of the first inner resin layer 111 and the second inner resin layer 121 may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

Although the receiving space is shown as being provided in each of the lower case 110 and the upper case 120 in FIGs. 2 and 3, the receiving space may be provided in any one of the cases.

Meanwhile, a thermally-fused sealed portion 130 is provided along edges of the lower case 110 and the upper case 120 that face each other in order to prevent moisture or air from entering the receiving space S of the lower case 110 and the upper case 120.

It is preferable for the sealed portion 130 to be constituted by a wing portion 131 located in an overall length direction (X-axis direction) of the pouch case 100, a terrace portion 132 located in an overall width direction (Y-axis direction) of the pouch case 100, and a reinforcement portion 133 extending from the terrace portion 132.

The reinforcement portion 133, which inhibits or delays venting of gas generated in the pouch case 100, thereby increasing the lifespan of the battery cell, is located alongside the electrode lead.

Specifically, it is preferable for the reinforcement portion to be provided at each of a pair of terrace portions 132 located so as to face each other, it is more preferable for the reinforcement portion to be provided at an edge of one side of the terrace portion spaced apart from the electrode lead 300 by a predetermined distance, and it is most preferable for the reinforcement portion to be provided at an edge of the terrace portion 132 located adjacent to the wing portion 131.

Specifically, on the assumption that the length of the wing portion is L1, the length of the terrace portion is L2, and the wing portion 131 is bent along line A-A', as shown in FIG. 4, the terrace portion 132 is located so as not to overlap line A-A' such that the terrace portion 132 is not bent with the wing portion 131.

Here, the shape or area of the reinforcement portion 133 is not particularly limited; however, the reinforcement portion may be trapezoidal in shape to increase the sealing force of the terrace portion 132 while having a small area. At this time, it is preferable for a long side of the reinforcement portion to be connected to the terrace portion 132, and it is more preferable for the reinforcement portion 133 to have a height such that the reinforcement portion does not protrude above the upper case when bent toward the side of the pouch case 100 in the overall width direction.

In actual application, the part of the pouch-shaped battery cell on which stress caused by gas generation is concentrated, whereby the seal is easily broken, is the terrace portion 132 from which the electrode lead 300 protrudes. In particular, the edge of the terrace portion spaced apart from the electrode lead 300 by a predetermined distance is the most vulnerable.

More specifically, the width W1 of the wing portion, which constitutes the sealed portion of the pouch-shaped battery cell, is longer than the width W2 of the terrace portion and the wing portion is fixed in the state in which the wing portion is bent toward the side of the pouch case in the overall width direction, whereby it is possible to maintain high sealing force. In contrast, the terrace portion 132 cannot be bent because the electrode lead is located therein, and there is a disadvantage in that energy density decreases when the width W2 of the terrace portion is increased to increase the sealing force.

Of course, the width W2 of the terrace portion in the vicinity of the electrode lead 300 is also small; however, it is difficult for gas to vent in the vicinity of the electrode lead 300 since the lead part is supported or fixed by a general structure of a module in which the pouch-shaped battery cell is used.

However, when the reinforcement portion is provided at the edge of one side of the terrace portion spaced apart from the electrode lead 300, as in the present invention, it is possible to increase the sealing force of the terrace portion, whereby it is possible to inhibit or delay gas venting, and therefore it is possible to increase the lifespan of the battery cell.

In particular, when the reinforcement portion 133 is bent toward the side of the pouch case 100 in the overall width direction and the bent state of the reinforcement portion is maintained using the fixing member 600, a description of which will follow, the sealing force is further increased.

Next, the electrode assembly 200 will be described. The electrode assembly 200, which is seated in the receiving space of the pouch case 100, may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode is manufactured by applying a slurry mixture of a negative electrode active material and a binder to a negative electrode current collector.

As the negative electrode active material, for example, there may be used carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode is manufactured by applying a slurry mixture of a positive electrode active material and a binder to a positive electrode current collector.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₂₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a portion to which the slurry including the active material is applied and an uncoated portion to which no slurry is applied. The uncoated portion is cut or a separate conductive member is connected to the uncoated portion by ultrasonic welding to form a pair of electrode tabs, i.e. a positive electrode tab 210 and a negative electrode tab 220.

A pair of electrode leads 300 constituted by a positive electrode lead 310 and a negative electrode lead 320 is electrically connected to the positive electrode tab 210 and the negative electrode tab 220, respectively, and is then exposed out of the pouch case 100.

Here, each of the pair of electrode tabs and a corresponding one of the pair of electrode leads 300 may be electrically connected to each other by welding, more specifically ultrasonic welding. Coupling by ultrasonic welding is performed according to the principle by which high-frequency vibration generated by an ultrasonic wave of about 20 kHz is applied, and vibration energy is converted into thermal energy due to friction at the interface between the electrode tab and the electrode lead as the result of operation of a horn and an anvil, whereby welding is rapidly performed.

Next, the protective tape 400 will be described. The protective tape 400 is disposed so as to wrap the part at which the electrode tab and electrode lead 300 overlap each other, i.e. a weld thereof.

Since the electrode tab and the electrode lead 300 are connected to each other by welding, the surfaces of the electrode tab and the electrode lead 300 may not be smooth, leading to poor insulation.

Specifically, if the surface of the weld is not smooth, the inner resin layer is peeled off when the weld and the pouch case 100 come into contact with each other due to impact, whereby the metal layer is exposed, and therefore poor insulation occurs. Consequently, it is preferable to wrap the weld using the protective tape 400 in order to prevent poor insulation.

Here, the protective tape 400 may be made of an insulating material, such as polypropylene, polyethylene, polyester, or polyimide. However, the material for the protective tape is not limited thereto as long as it is possible to wrap the weld and to maintain the insulated state when in contact with the pouch case 100.

The lead film 500, which is constituted by a first lead film 510 and a second lead film 520, is spaced apart from the protective tape 400 by a predetermined distance and is located at the sealed portion 130 at which the upper case 120 and the lower case 110, which constitute the pouch case 100, are thermally fused, thereby fixing the electrode lead 300 to the pouch case 100. Consequently, electricity generated by the electrode assembly 200 is prevented from flowing to the pouch case 100 via the electrode lead 300 while the seal of the pouch case 100 is maintained.

It is preferable for the lead film 500 to be made of a non-conductive material that does not conduct electricity well, and an insulating tape that is easily attached to the electrode lead 300 and relatively thin is generally used; however, the present invention is not limited thereto.

Specifically, the lead film 500 may be made of any one material or two or more materials selected from the group consisting of polyimide (PI), polypropylene (PP), polyethylene (PE), polyethylene terephthalate (PET), and polyvinyl chloride (PVC), high density polyethylene (HDPE), and an epoxy resin, and the lead film is bonded to the inner resin layer of the pouch case by thermal fusion using heat and pressure.

Next, the fixing member 600 will be described. As described above, the fixing member 600 is configured to fix the reinforcement portion. Specifically, the fixing member 600 is a belt-shaped tape with an adhesive applied to one surface thereof and is located so as to wrap the reinforcement portion 133. That is, one end of the fixing member is fixed to the lower case 110, and the other end of the fixing member is fixed to the upper case 120, whereby the bent state of the reinforcement portion 132 may be maintained.

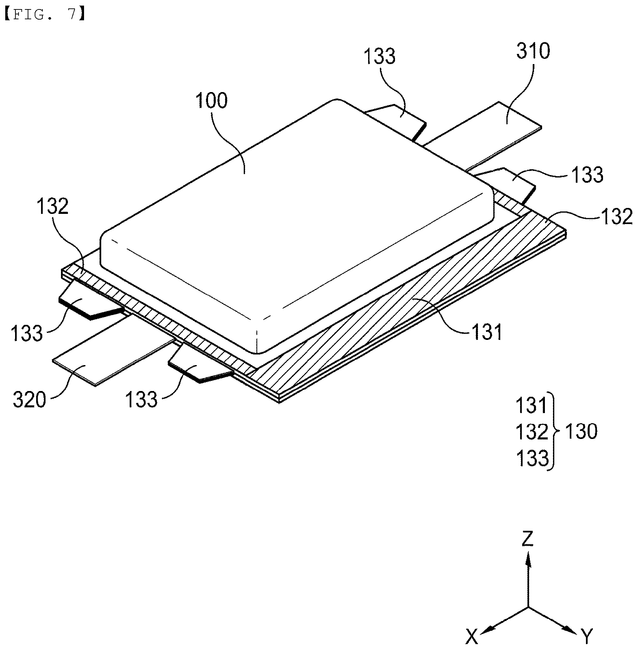

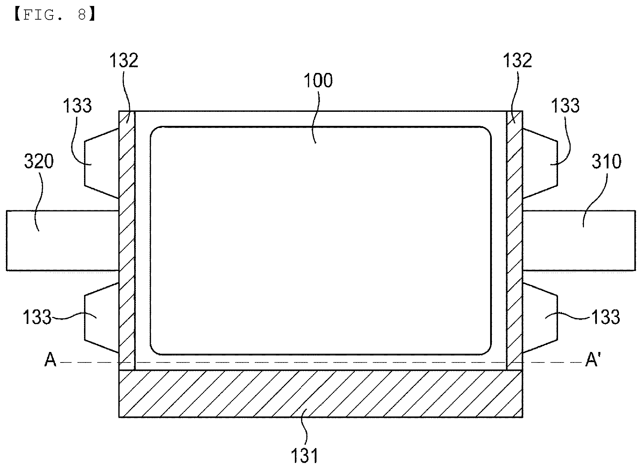

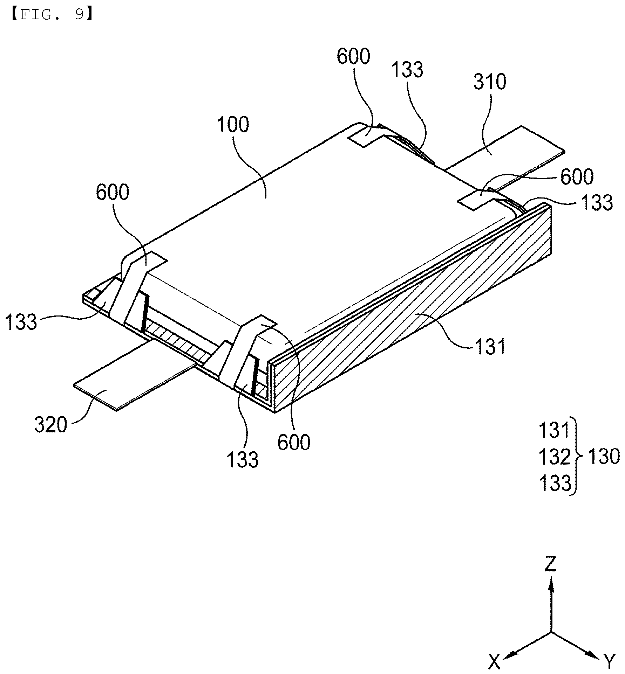

FIG. 7 is a perspective view of a pouch-shaped battery cell according to a second preferred embodiment of the present invention in a sealed state, FIG. 8 is a plan view of the pouch-shaped battery cell shown in FIG. 7, and FIG. 9 is a perspective view of the pouch-shaped battery cell according to the second preferred embodiment of the present invention.

The second preferred embodiment of the present invention is identical in other configurations to the first preferred embodiment of the present invention except for reinforcement portions, and therefore only the reinforcement portions will hereinafter be described.

The reinforcement portions according to the second embodiment are located in a pair of terraced portions 132 facing each other and are provided in the vicinity of opposite edges of each terraced portion 132, i.e. opposite sides of the terraced portion in the state in which an electrode lead 300 is located between the reinforcement portions.

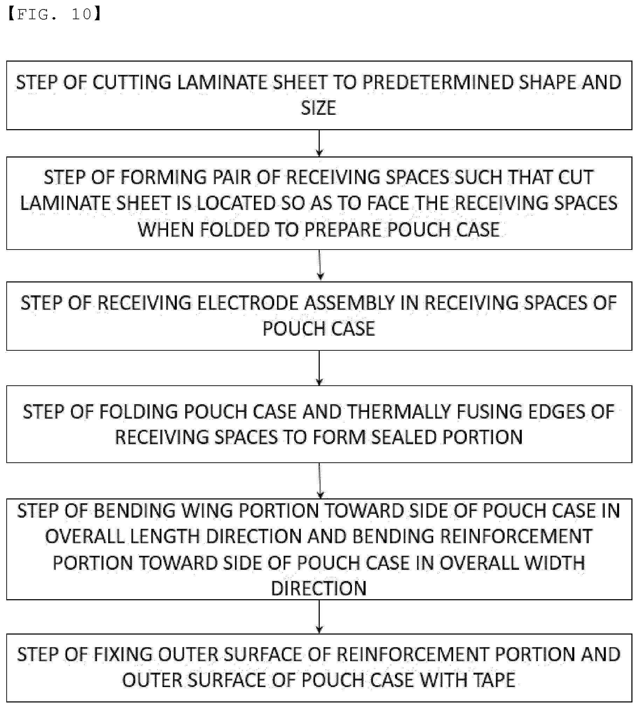

Next, a method of manufacturing a pouch-shaped battery cell according to the present invention will be described. FIG. 10 is a flowchart illustrating the method of manufacturing the pouch-shaped battery cell according to the present invention.

Referring to FIG. 10, a method of manufacturing a pouch-type battery cell of the present invention may include a first step of cutting a laminate sheet constituted by an inner resin layer, a metal layer, and an outer resin layer to a predetermined shape and size, a second step of forming a pair of receiving spaces such that the cut laminate sheet is located so as to face the receiving spaces when folded to prepare a pouch case, a third step of receiving an electrode assembly in the receiving spaces of the pouch case, and a fourth step of folding the pouch case and thermally fusing edges of the receiving spaces to form a sealed portion.

It is obvious that the laminate sheet must be cut in the first step such that a reinforcement portion can be formed. The reason for this is that the sealed portion is formed by the thermal fusion process in the fourth step, wherein the sealed portion is constituted by a wing portion located in an overall length direction of the pouch case, a terrace portion located in an overall width direction of the pouch case, and a reinforcement portion extending outwardly from the terrace portion.

In the second step, the receiving spaces are formed such that the width of the wing portion is greater than the width of the terrace portion after thermal fusion.

Meanwhile, a step of bending the wing portion toward the side of the pouch case in the overall length direction and a step of bending the reinforcement portion toward the side of the pouch case in the overall width direction may be further included after the fourth step, wherein these steps may be simultaneously performed.

It is also preferable to further perform a step of fixing an outer surface of the reinforcement portion and an outer surface of the pouch case with a tape such that the bent state of the reinforcement portion is maintained after the reinforcement portion is bent.

The present invention provides a battery module including the pouch-shaped battery cell and a battery pack including the battery module.

Those skilled in the art to which the present invention pertains will appreciate that various applications and modifications are possible within the category of the present invention based on the above description.

### (Description of Reference Symbols)

100: Pouch case
110: Lower case
111: First inner resin layer 112: First metal layer
113: First outer resin layer
120: Upper case
121: Second inner resin layer 122: Second metal layer
123: Second outer resin layer
130: Sealed portion
131: Wing portion 132: Terrace portion
133: Reinforcement portion
200: Electrode assembly
210: Positive electrode tab 220: Negative electrode tab
300: Electrode lead
310: Positive electrode lead 320: Negative electrode lead
400: Protective tape
410: First protective tape 420: Second protective tape
500: Lead film
510: First lead film 520: Second lead film
600: Fixing member
L1: Length of wing portion L2: Length of terrace portion
W1: Width of wing portion W2: Width of terrace portion
S: Receiving space

## Claims

1. A pouch-shaped battery cell comprising:
a pouch case comprising a lower case, an upper case, and a sealed portion, wherein the lower case has a receiving space, the upper case is located on the lower case, and the sealed portion is a thermally-fused three-sided sealed portion located at edges of the lower case and the upper case that face each other;
an electrode assembly received in the pouch case, the electrode assembly comprising a positive electrode, a negative electrode, a separator, and a pair of electrode tabs provided at one side or opposite sides thereof; and
a pair of electrode leads connected to the pair of electrode tabs, the pair of electrode leads protruding out of the pouch case, wherein
the sealed portion includes a wing portion, a terrace portion, and a reinforcement portion, wherein the wing portion extends along an overall length direction of the pouch case, wherein the terrace portion extends along an overall width direction of the pouch case, and wherein the reinforcement portion has a predetermined shape and area extending outwardly from the terrace portion and is configured to inhibit or delay a gas venting of the pouch-shaped battery cell, and
wherein a width of the wing portion is greater than a width of the terrace portion.

2. The pouch-shaped battery cell according to claim 1, wherein the reinforcement portion is provided on each of a pair of terrace portions, wherein each of the pair of terrace portions is disposed so as to face each other.

3. The pouch-shaped battery cell according to claim 2, wherein the reinforcement portion is provided in a vicinity of an edge of each of the pair of terrace portions.

4. The pouch-shaped battery cell according to claim 3, wherein the reinforcement portion is provided in a vicinity of each of opposite edges of each of the pair of terrace portions.

5. The pouch-shaped battery cell according to claim 3, wherein the reinforcement portions are provided at opposite sides in a state in which the electrode lead is located therebetween.

6. The pouch-shaped battery cell according to claim 2, wherein the wing portion is configured to bend toward a side of the pouch case in the overall length direction.

7. The pouch-shaped battery cell according to claim 6, wherein the reinforcement portion is configured to bend toward a side of the pouch case in the overall width direction.

8. The pouch-shaped battery cell according to claim 7, further comprising a fixing member located at an outer surface of the reinforcement portion so as to maintain a bent state of the reinforcement portion.

9. The pouch-shaped battery cell according to claim 8, wherein
the fixing member is a belt-shaped tape with an adhesive applied to one surface thereof and is located so as to wrap the reinforcement portion, and
one end of the fixing member is fixed to the lower case and the other end of the fixing member is fixed to the upper case.

10. A method of manufacturing a pouch-shaped battery cell, the method comprising:
a first step of cutting a laminate sheet having an inner resin layer, a metal layer, and an outer resin layer to a predetermined shape and size;
a second step of forming a pair of receiving spaces in the cut laminate sheet, wherein the pair of receiving spaces are located so as to face each other when the cut laminate sheet is folded to prepare a pouch case;
a third step of receiving an electrode assembly in the pair of receiving spaces of the pouch case; and
a fourth step of folding the pouch case and thermally fusing edges of the pair of receiving spaces to form a sealed portion, wherein
the sealed portion includes a wing portion, a terrace portion, and a reinforcement portion, wherein the wing portion extends along an overall length direction of the pouch case, wherein the terrace portion extends along an overall width direction of the pouch case, and wherein the reinforcement portion has a predetermined shape and area extending outwardly from the terrace portion and is configured to inhibit or delay a gas venting of the pouch-shaped battery cell, and
wherein a width of the wing portion is greater than a width of the terrace portion.

11. The method according to claim 10, further comprising bending the wing portion toward a side of the pouch case in the overall length direction after the fourth step.

12. The method according to claim 10, further comprising bending the reinforcement portion toward a side of the pouch case (100) in the overall width direction after the fourth step.

13. The method according to claim 12, further comprising fixing an outer surface of the reinforcement portion and an outer surface of the pouch case with a tape so as to maintain a bent state of the reinforcement portion.

14. A battery module comprising the pouch-shaped battery cell according to any one of claims 1 to 9.
